Europäisches Patentamt

European Patent Office

Office européen des brevets

(19)

(11) Veröffentlichungsnummer : **0 200 853**
**B1**

(12) **EUROPÄISCHE PATENTSCHRIFT**

(45) Veröffentlichungstag der Patentschrift :
**23.11.89**

(21) Anmeldenummer : **86101246.6**

(22) Anmeldetag : **31.01.86**

(51) Int. Cl.⁴ : **C 09 D 3/70, C 08 L 77/00, C 08 J 3/12**

(54) Verfahren zur Herstellung von pulverförmigen Beschichtungsmitteln auf der Basis von Polyamiden.

(30) Priorität : **23.03.85 DE 3510689**

(43) Veröffentlichungstag der Anmeldung :
**12.11.86 Patentblatt 86/46**

(45) Bekanntmachung des Hinweises auf die Patenterteilung : **23.11.89 Patentblatt 89/47**

(84) Benannte Vertragsstaaten :
**AT BE CH DE FR GB IT LI NL SE**

(56) Entgegenhaltungen :
**EP--A-- 0 014 772
DE--A-- 2 222 123
FR--A-- 2 327 283**

(73) Patentinhaber : **HÜLS AKTIENGESELLSCHAFT - RSP Patente / PB 15 - Postfach 13 20 D-4370 Marl 1 (DE)**

(72) Erfinder : **Mumcu, Salih, Dr. Leverkusener Strasse 12 D-4370 Marl (DE)**

EP 0 200 853 B1

## Beschreibung

Gegenstand der Erfindung ist ein Verfahren zur Herstellung von pulverförmigen Beschichtungsmitteln praktisch einheitlicher Korngröße auf der Basis von Polyamiden mit mindestens 10 aliphatisch gebundenen Kohlenstoffatomen pro Carbonamidgruppe oder Copolyamiden oder einer Mischung aus Homo- und Copolyamiden, welche mindestens 70 % der genannten Bausteine enthalten, nach dem Fällungsverfahren.

Es ist bekannt, pulverförmige Beschichtungsmittel auf Basis von Polyamiden zur Herstellung lackähnlicher Überzüge von Metallen einzusetzen. Die Beschichtung erfolgt nach dem Schmelzüberzugsverfahren, nämlich dem Wirbelsinterverfahren, dem Flammspritzverfahren oder nach dem elektrostatischen Beschichtungsverfahren. Die Polyamidpulver werden erhalten durch Fällen des Polyamids aus Lösungen (am 10.05.51 ausgelegte Unterlagen der deutschen Patentanmeldung S 2 80 5/39 b 22/04 oder Äquivalente FR-A-989 062) oder durch Mahlen des Polyamidgranulates, vorzugsweise bei tiefen Temperaturen unter einer Inertgasatmosphäre.

Das Fällungsverfahren der vorgenannten französischen Patentschrift beschreibt das Ausfällen von Polyamidpulvern aus Ethanol durch Abkühlen der heißen Polyamidlösung durch äußere Einwirkung oder durch Abkühlenlassen. Allein durch Abkühlen bzw. Abkühlenlassen der heißen Polyamidlösung werden Pulver mit hohem Feinkornanteil erhalten, die zu Staubauswurf im Wirbelbett führen. Schließlich treten bei einer solchen Arbeitsweise unerwünschte Agglomerate auf, die anschließend durch Zerreiben oder Zermahlen in die erforderliche Pulvergröße überführt werden müssen. Außerdem werden bei einem solchen Verfahren nicht reproduzierbare, d. h. unterschiedliche Chargen erhalten.

Es ist ferner bekannt, Polyamidpulver herzustellen, indem man niedermolekulare Polyamide mahlt und die so erhaltenen Pulver anschließend auf die gewünschte Viskosität bringt, indem man sie in an sich bekannter Weise auf Temperaturen unterhalb des Schmelzpunktes erhitzt (britische Patentschrift 535 138, deutsche Offenlegungsschrift 1 570 392).

Auch Polylaurinlactampulver werden nach diesen bekannten Verfahren hergestellt und nach den ebenfalls bekannten Verfahren zum Beschichten eingesetzt (Chem. Ind., November 1968, S. 783 bis 791 ; Modern Plastics, Februar 1966, S. 153 bis 156). Da Polylaurinlactampulver nicht immer den geforderten Bedingungen hoher Elastizität, guter Kantenbeschichtung, glatter Oberfläche, Beständigkeit gegenüber alkalischen wäßrigen Lösungen genügen und vielfach bei der Verarbeitung insbesondere zum Qualmen neigen, sind die verschiedenartigsten Verbesserungen bekanntgeworden, wie weichmacherhaltige Polylaurinlactampulver (deutsche Auslegeschrift 1 669 821) ; solche aus einem Gemisch aus Homopolylaurinlactam und laurinlactamhaltigen Copolyamiden (deutsche Auslegeschrift 2 144 606), solche, die N-alkoximethylgruppenhaltige Polyamide neben sauer reagierenden Katalysatoren enthalten (deutsche Offenlegungsschrift 2 222 122), oder Gemische aus Polyamiden mit 8 bis 11 aliphatisch gebundenen Kohlenstoffatomen pro Carbonamidgruppe, alkoxialkylgruppentragenden Aminoplasten und sauer reagierenden Katalysatoren (deutsche Offenlegungsschrift 2 222 123). Diese Pulver zeigen in einzelnen Fällen gute Eigenschaften, genügen jedoch noch nicht voll allen geforderten Bedingungen.

Ein verbessertes Verfahren wird in der deutschen Auslegeschrift 2 545 267 beschreiben.

Dieses Verfahren befriedigt insofern noch nicht vollständig, da zur Herstellung von pigmentfreien Pulvern ein Mahlverfahren angewendet und zur Herstellung von pigmentierten Pulvern das Fällungsverfahren betrieben werden muß. Schließlich ist für das Gelingen dieses Verfahrens Voraussetzung, Polylaurinlactamgranulate einzusetzen, welche ausschließlich durch hydrolytische Polymerisation in Gegenwart bestimmter Mengen Phosphorsäure hergestellt worden sind.

Aus der EP-B1 14 772 bzw. der Äquivalenten DE-B-29 06 647 ist ein weiteres verbessertes Verfahren zur Herstellung von Beschichtungspulvern nach dem Fällverfahren bekannt.

Nach dem Fällverfahren hergestelle Beschichtungspulver weisen gegenüber denen, die nach dem Mahlverfahren hergestellt werden, etwas günstigere Korngrößenverteilungen auf, die Körner sind auch weniger kantig. Dennoch müssen sie durch Sieben oder Sichten klassiert werden, um die störenden Fein- bzw. Grobanteile zu entfernen.

Aufgabe der Erfindung ist, Beschichtungspulver auf der Basis von Polyamiden mit enger Korngrößenverteilung herzustellen, wobei die einzelnen Teilchen kugelige Form besitzen sollen. Schließlich sollen die so erhaltenen Pulver hinsichtlich ihrer anderen Eigenschaften zumindest gleich gute Eigenschaften behalten. Da die bekannten Beschichtungspulver für das Wirbelsinterverfahren bei Schichtdicken unter 200 $\mu$m versagen, soll mit der gestellten Aufgabe auch diese Aufgabe gelöst werden. Die Lösung dieser Aufgabe gelingt durch das Verfahren wie im Anspruch angegeben.

Unter pulverförmigen Beschichtungsmitteln mit praktisch einheitlicher Korngröße werden verstanden, die folgende Bedingungen erfüllen : 98 Gewichtsprozent der Pulver dürfen eine Abweichung vom mittleren Korndurchmesser von höchstens 40 % aufweisen. Mit anderen Worten, bei einem mittleren Korndurchmesser von z. B. 100 $\mu$m darf die Abweichung von der mittleren Korngröße höchstens 40 $\mu$m betragen. Nach den bisher bekannten Verfahren liegt dieser Bereich bei enger Korngrößenverteilung bei ± 100 $\mu$m.

Einsetzbare Polyamide für das Verfahren sind demnach Polyundecansäureamid, Polylaurinlactam (11 aliphatisch gebundene Kohlenstoffatome pro Carbonamidgruppe) und Polyamide mit mehr als 11 aliphatisch gebundenen Kohlenstoffatomen pro Carbonamidgruppe, vorzugsweise Polylaurinlactam. Außerdem können die entsprechenden Copolyamide eingesetzt oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomerer, wie Caprolactam, Hexamethylendiamin, Dodecamethylendiamin, Isophorondiamin, Trimethylhexamethylendiamin, Adipinsäure, Azelainsäure, Sebacinsäure, Dodecandisäure, Aminoundecansäure enthalten. Die im folgenden als Polyamide bezeichneten genannten Homo- oder Copolyamide werden als Granulate eingesetzt, die eine relative Lösungsviskosität zwischen 1,4 und 1,8 (gemessen in 0,5 % m-Kresollösung bei 25 °C) besitzen. Vorzugsweise werden sie erhalten durch hydrolytische Polymerisation ; es können jedoch auch solche verwendet werden, die nach der acidolytischen oder der aktivierten anionischen Polymerisation hergestellt worden waren. Die nach der hydrolytischen Polymerisation erhaltenen Polyamide können im Molekulargewicht geregelt oder ungeregelt hergestellt worden sein, d. h. in Abwesenheit jeglicher Kettenstabilisatoren, wie Essigsäure, Benzoesäure, Adipinsäure, Azelainsäure, Sebacinsäure, Dodecandisäure.

Vorteilhaft verwendet man als Polylaurinlactam ein solches, welches in Gegenwart von 0,3 bis 0,7 Gewichtsprozent Phosphorsäure, 2 bis 10 Gewichtsprozent Wasser bei Temperaturen zwischen 265 und 300 °C in Abwesenheit jeglicher Kettenstabilisatoren unter Eigendruck hergestellt worden war. Die Phosphorsäurezugabe kann auch ganz nach der Fällung oder teilweise während der Polymerisation und nach der Fällung zugesetzt werden. Zweckmäßigerweise wird eine Extraktion mit Ethanol oder Methanol vorgeschaltet.

Als Lösemittel für das Fällungsverfahren gemäß der Erfindung wird ausschließlich Ethanol verwendet. Als Ethanol kann hierbei neben wasserfreiem Ethanol der übliche Alkohol eingesetzt werden, der bis zu 10 Gewichtsprozent Wasser und die üblichen Vergällungsmittel, wie z. B. Methylethylketon, Petrolether, Pyridin enthalten kann. Das Ethanol wird in solchen Mengen eingesetzt, daß der Polyamidanteil höchstens 25 Gewichtsprozent beträgt, vorzugsweise liegt dieser Anteil bei 10 bis 18 Gewichtsprozent. Pulver für das Elektrostatikverfahren werden vorteilhaft im unteren Konzentrationsbereich (10 bis 15 %), solche für das Wirbelsinterverfahren im oberen Konzentrationsbereich (15 bis 18 %) gefällt.

Zur Durchführung des Verfahrens wird die Mischung aus Polyamid und Ethanol, zweckmäßigerweise in mantelbeheizten Rührkesseln auf die Lösetemperatur gebracht ; diese liegt bei 126 bis 140 °C, vorzugsweise 127 bis 135 °C. Die Aufheizgeschwindigkeit ist nicht kritisch. Vorzugsweise hält man die Lösetemperatur maximal eine Stunde konstant. Das Aufheizen kann über Wärmeträger im Mantel oder vorteilhaft mit Hilfe von Niederdruckdampf oder auch Hochdruckdampf bei größeren Kesselvolumina erfolgen. Die Rührgeschwindigkeit während des Lösevorganges hat praktisch keinen Einfluß auf die Korngrößenverteilung.

Die klare Lösung wird unter Rühren und Destillation des Ethanols unter Eigendruck und Abführen des kalten Kondensats mit einer Abkühlgeschwindigkeit zwischen 3 und 30 °C in der Stunde, vorzugsweise 10 bis 20 °C in der Stunde, abgekühlt, wobei man die Manteltemperatur bis zum Schluß der Fällungsphase so regelt, daß sie nicht unter der Innentemperatur liegt.

Unter Einhaltung dieser Bedingungen liegt die Fällungsdauer des Polyamids unter 2 Stunden, vorzugsweise zwischen 5 Minuten und 1 Stunde. Die Fälltemperatur ist beim Abkühlen der Lösungen dadurch erkennbar, daß die Temperaturkurve der Innentemperatur in die Horizontale umschwenkt (Knick). Die Fälltemperatur liegt im Bereich von 110 bis 120 °C, vorzugsweise im Bereich von 112 bis 118 °C.

Vorzugsweise wird die eigentliche Fällphase (horizontaler Ast der Temperaturkurve) isotherm ausgeführt, um die Korngrößenverteilung noch enger zu gestalten. Die Fällungstemperatur läßt sich einfach konstant halten durch Anpassung der destillierten Ethanolmenge an die freiwerdende Fällungswärme. Das Ende der Fällungsphase wird an der stark abfallenden Innentemperatur erkannt. In der eigentlichen Fällungsphase werden mindestens 70 % des eingesetzten Polyamids gefällt.

Die mittlere Korngröße wird hauptsächlich durch die Rührerdrehzahl in der Abkühl- und Fällphase bestimmt. Geeignete Rührorgane sind Balkenrührer, Propellerrührer, Ankerrührer und Blattrührer, vorzugsweise Blattrührer, die in der Drehzahl variierbar sind. Die Abmessungen der Blattrührer liegen im Bereich Durchmesser Reaktor zu Durchmesser Rührblatt 2 : 1.

Zur Herstellung von Wirbelsinterpulvern mit mittlerem Korndurchmesser 100 μm, d. h. einem Korngrößenbereich von 60 bis 140 μm oder enger, wird eine niedrige Rührerdrehzahl gewählt. Für die feineren Elektrostatikpulver mit mittlerem Korndurchmesser von 50 μm, d. h. einen Bereich von 30 bis 70 μm oder enger, sollte das Strömungsbild turbulent sein, was durch hohe Rührerdrehzahl und geeignete Strombrecher erreicht werden kann.

Nach der Fällungsphase kann ohne Gefahr einer Polymerfilmbildung an der Reaktorwand mit Mantelkühlung gearbeitet werden.

Die Suspension wird bis zu der bei 20 % Ethanolfeuchte einsetzenden Rieselfähigkeit des Produktes unter vermindertem Druck und Wandtemperaturen unterhalb 100 °C sowie schonender mechanischer Bewegung, z. b. in langsam laufenden Schaufel- oder Taumeltrocknern getrocknet. Nach Erreichen der Rieselfähigkeit kann die mechanische Bewegung intensiver werden und die Temperatur im Trockner auf über 100 °C bis zu 150 °C angehoben werden.

Nach dem Verfahren der Erfindung gelingt es somit wahlweise, sowohl Wirbelsinterpulver als auch Elektrostatikpulver ohne Klassierschritte direkt mit enger Korngrößenverteilung herzustellen. Die erfindungsgemäßen Wirbelsinterpulver zeigen im Wirbelbad kein Stauben. Sie ergeben auf Metallen Überzüge mit gutem Verlauf auch bei Schichtdicken 120 bis 200 $\mu$m, welche mit Wirbelsinterpulvern gemäß dem Stand der Technik nicht möglich sind. Allgemein sind die Überzüge, die mit Pulvern nach dem Verfahren der Erfindung erhalten werden, ausgezeichnet hinsichtlich Bläschenniveau, Dehnbarkeit und Kantenbeschichtung als auch Beständigkeit gegenüber alkalischen wäßrigen Lösungen. Ihre mechanische Festigkeit liegt auf einem hohen Niveau.

Die Fällung kann auch in Gegenwart von Pigmenten, wie Titandioxid, Ruß, $BaSO_4$, ZnS, Cadmiumrot, Eisenoxid, oder Stabilisatoren, wie 4-Hydroxy-3.5-di-tert.-butylphenyl-propionsäure, 4-Hydroxy-3.5-di-tert.-butylphenyl-propionsäure-hexamethylendiamin-bisamid, -propionsäureester mit einem aliphatischen Alkohol mit 1 bis 18 C-Atomen, Tris-alkylphenyl-, Tris-alkyl, Tris-aryl- oder gemischten Estern der phosphorigen Säure, deren Alkylrest 1 bis 16 C-Atome enthält und geradkettig oder verzweigt ist, oder in Gegenwart von Tensiden vorgenommen werden.

Vorteilhaft werden solche Pigmente eingesetzt, die die Kristallisation des Polyamids bei der Fällung nicht oder wenig nukleieren. Die Nukleierwirkung des Pigments wird bei folgendem Experiment ermittelt. (Als Apparatur kann auch das in Chem. Ing. Technik 51 (1979), Nr. 8, S. 823, beschriebene Kalorimeter benutzt werden): Ein 5 1-Autoklav mit Blattrührer (Durchmesserverhältnis Autoklav/Rührer = 2/1) wird durch gute Wärmeisolation zu einem Kalorimeter umgebaut. In diesen Kalorimeter bringt man eine Mischung von 2 400 g Ethanol (Methylethylketon vergällt, Wassergehalt 1 Gewichtsprozent), 400 g Polyamid-Granulat (z. B. Polyamid 12) und 32 g Pigment hinein und löst das Polyamid unter Rühren (160 Upm) innerhalb einer Stunde bei 145 °C. Anschließend wird das Umpumpen des Heizmediums im Mantel abgestellt und die Innentemperatur durch Destillation des Ethanols in eine externe Vorlage mit einer Geschwindigkeit von 60 °C/Stunde bis 110 °C herabgesetzt.

Nun wird die Destillation abgestellt und die Innentemperatur nicht mehr geregelt. Die Fällung erfolgt innerhalb von 30 Minuten. Je höher die Nukleierwirkung des Pigments für die Kristallisation des Polyamids ist, umso höher ist das erreichbare Innentemperaturmaximum $T_{max}$. Beim Ansatz ohne Pigment steigt die Temperatur gewöhnlich bis $T_N = 110.4$ °C.

$\Delta T = T_{max} - T_N$ ist ein Maß für die Nukleierwirkung des Pigments. $T_{max}$ und damit $\Delta T$ ist auch stark abhängig vom eingesetzten Polyamid.

Gemäß dem Verfahren der Erfindung sind Pigmente mit $\Delta T < 3$ °C, insbesondere $\Delta T = 0,5$ bis 2 °C, brauchbar. Pigmente mit $\Delta T > 3$ °C führen zu breiten Korngrößenverteilungen mit hohem Feinstkornanteil $< 10$ $\mu$m.

## Beispiel 1

300 kg in Gegenwart von 1 Mol-% Dodecandisäure (bezogen auf Laurinlactam) hergestelltes Polyamid 12 mit einer relativen Lösungsviskosität von 1,65 werden zusammen mit 2 500 l mit Methylethylketon-vergälltem Ethanol, Wassergehalt 1 Gew.-%, in einem 3 m³-Reaktor (d = 1 600 mm) aufgeheizt und eine Stunde bei 129 °C gehalten. Anschließend wird die Lösung bei der Rührerdrehzahl (Blattrührer, d = 800 mm) 50 Upm durch Destillation des Ethanols in eine externe Vorlage mit einer mittleren Geschwindigkeit von 12 °C pro Stunde abgekühlt, wobei die Manteltemperatur so geregelt wird, daß sie nicht unter der Innentemperatur liegt.

Bei der Innentemperatur 115 °C beginnt die Fällung, welche sich durch einen Anstieg der Innentemperatur bemerkbar macht. Nun wird die Destillationsleistung so weit gesteigert, daß die Innentemperatur bis zum Fällungsende, welches sich durch starke Abnahme der Innentemperatur deutlich macht, bei 115 ± 0,3 °C bleibt. Die Fällung dauert 18 Minuten (die abdestillierte Menge an Ethanol beträgt insgesamt 500 l). Anschließend wird die Destillation abgestellt und die entstandene Suspension über den Reaktormantel auf 45 °C abgekühlt und in einem Schaufeltrockner bis auf eine Restfeuchte von 0,15 Gew.-% getrocknet.

Die Korngrößenverteilung — welche mittels eines Luftstrahlsiebes gemessen wurde — ist sehr eng:

| | |
|---|---|
| $< 60$ $\mu$m : 0 | Gew.-% |
| $< 80$ $\mu$m : 1,2 | Gew.-% |
| $< 100$ $\mu$m : 48 | Gew.-% |
| $< 120$ $\mu$m : 99 | Gew.-% |
| $< 140$ $\mu$m : 100 | Gew.-% |

Das Pulver zeigt im Wirbelbad kein Stauben. Mit dem Pulver wurde an 1 mm-Blechen, die zuvor in einem Umluftofen auf 380 °C erhitzt wurden, Beschichtungen durchgeführt. Porenfreie Überzüge mit gutem Verlauf konnten bei Schichtdicken ab 110 $\mu$m erreicht werden.

## Beispiel 2

Hierbei wurde entsprechend dem Beispiel 1 verfahren, jedoch zusätzlich 45 kg $TiO_2$-Pigment mit der schwachen Nukleierwirkung ($\Delta T = 1,2$ °C) zusammen mit dem Granulat eingesetzt.

Um etwa die gleiche mittlere Korngröße zu erhalten, mußte die Rührerdrehzahl auf 44 Upm eingestellt werden. Man erhält nichtstaubendes Pulver mit sehr enger Korngrößenverteilung, mit dem porenfreie Überzüge ab 120 $\mu$m möglich sind.

<div align="center">Vergleichsbeispiel 1</div>

Es wird eine Lösetemperatur von 145 °C eingestellt und im übrigen die Bedingungen des Beispiels 1 eingehalten. Um die mittlere Korngröße einhalten zu können, mußte hier die Rührerdrehzahl auf 35 Upm eingestellt werden. Das Pulver hat eine breite Korngrößenverteilung, so daß es — um das Stauben zu verhindern — klassiert werden mußte. Das Pulver liefert bei Schichtdicken unter 200 $\mu$m keine porenfreie Überzüge.

<div align="center">Vergleichsbeispiel 2</div>

Hier wurde das in Beispiel 1 eingesetzte Polyamid bei 129 °C gelöst. Die weitere Ausführung wird analog dem Beispiel 1 der DE-B-29 06 647 bzw. der EP-B-14 772 vorgenommen, wobei beim Erreichen der Innentemperatur 117 °C die Drehzahl auf 20 Upm, die Manteltemperatur auf 111,5 °C eingestellt und 2 bar $N_2$ auf die Lösung aufgedrückt wurden. Das Pulver weist eine bimodale Kornverteilung mit hohem Feinstkornanteil auf, der im Wirbelbad stark zum Stauben führt. Porenfreie Überzüge mit diesem Pulver sind nach dem Klassieren bei Schichtdicken ab 200 $\mu$m möglich.

<div align="center">Vergleichsbeispiel 3</div>

Dieses Beispiel 1 wird analog dem Verfahren der DE-B-29 06 647 bzw. der EP-B-14 772 ausgeführt. Anstelle des dort verwendeten Polyamids wird ebenfalls ein Polyamid eingesetzt, das in Gegenwart von 1 Mol-% Dodecandisäure (bezogen auf das eingesetzte Laurinlactam) hergestellt worden war (Beispiel 1).

In der Tabelle sind die Versuchsergebnisse aus den Beispielen und Vergleichsbeispielen zusammengestellt. Daraus geht hervor, daß die gestellte Aufgabe nur mit erfindungsgemäßen Pulvern gelöst wird.

<div align="center">(Siehe Tabelle Seite 6 f.)</div>

Tabelle

| | Pigment | Nukleier-wirkung $\Delta T$ [°C] | Löse-temp. [°C] | Rührer-drehzahl [Upm] | Abkühl-geschwin-digkeit [°C/h] | Füllungs-zeit. [min] | Füllungs-temp. [°C] | Kornanteile Gew.-% | | | | | | | Stauben | porenfreie Überzüge |
|---|---|---|---|---|---|---|---|---|---|---|---|---|---|---|---|---|
| | | | | | | | | <40 μm | <60 μm | <80 μm | <100 μm | <120 μm | <140 μm | <160 μm | | |
| Beispiel 1 | - | - | 129 | 50 | 12 | 18 | 115 | 0 | 0 | 1,2 | 48 | 99 | 100 | 100 | nein | ab 110 μm |
| Beispiel 2 | TiO$_2$ | 1,2 | 129 | 44 | 12 | 12 | 116 | 0 | 0 | 0 | 57 | 100 | 100 | 100 | nein | ab 120 μm |
| Vergleichsbeispiel 1 | - | - | 145 | 35 | 12 | 50 | 112 | 1,3 | 5 | 19 | 52 | 80 | 90 | 99 | ja | ab 200 μm |
| Vergleichsbeispiel 2 | - | - | 129 | 20 | 8 | 10 | 117 | 20 | 22 | 35 | 54 | 68 | 79 | 90 | ja | nach dem Klassieren ab 200 μm |
| Vergleichsbeispiel 3 | - | - | 140 | 20 | 8 | 720 | 116-117 | 1,3 | 7 | 20 | 51 | 78 | 87 | 99 | ja | ab 200 μm |

EP 0 200 853 B1

## Patentansprüche

1. Verfahren zur Herstellung von Beschichtungspulvern praktisch einheitlicher Korngröße auf der Basis von Polyamiden mit mindestens 10 aliphatisch gebundenen Kohlenstoffatomen pro Carbonamidgruppe oder Copolyamiden oder einer Mischung aus Homo- und Copolyamiden, welche mindestens 70 % der genannten Bausteine enthalten, nach dem Fällungsverfahren, dadurch gekennzeichnet, daß das Polyamid bei Temperaturen im Bereich von 127 bis 135 °C in Ethanol so aufgelöst wird, daß der Polyamid-Anteil in der Lösung 25 Gew.-% nicht übersteigt ; die Lösung unter Abdestillieren von Ethanol mit einer Geschwindigkeit von 3 bis 30 °C pro Stunde abkühlt, die Manteltemperatur des Reaktors bis zum Ende der Fällungsphase nicht die Temperatur des Reaktorinhaltes unterschreitet und die Temperatur während der Fällung im Bereich von 112 bis 118 °C liegt.

2. Verfahren nach Anspruch 1, dadurch gekennzeichnet, daß zur Herstellung pigmentierter Pulver ein Titandioxidpigment verwendet wird, das die Polyamidkristallisation aus Ethanol schwach nukleiert ($\Delta T < 3$ °C, wobei $\Delta T$ durch nachstehende Formel

$$\Delta T = T_{max} - T_N$$

charakterisiert ist und in der

$T_{max}$ : Maximale Temperatur der polyamid- und pigmenthaltigen Lösung während der Fällung des Polyamides

$T_N$ : Maximale Temperatur der polyamidhaltigen Lösung (ohne Pigment) während der Fällung des Polyamides bedeutet)).

3. Verwendung der Beschichtungspulver gemäß den Ansprüchen 1 und 2 zur Herstellung von Beschichtungen nach dem Schmelzüberzugsverfahren.

## Claims

1. A process for the production of coating powders of virtually uniform particle size, based on polyamides having at least 10 aliphatically bound carbon atoms per carboxamide group or copolyamides or a mixture of homopolyamides and copolyamides, containing at least 70 % of the said components, by the precipitation process, characterized in that the polyamide is dissolved in ethanol at temperatures in the range from 127 to 135 °C in such a way that the polyamide content in the solution does not exceed 25 % by weight, the solution is cooled at a rate of 3 to 30 °C per hour while distilling off ethanol, the jacket temperature of the reactor does not fall below the temperature of the reactor contents until the end of the precipitation phase, and the temperature during the precipitation is in the range from 112 to 118 °C.

2. A process as claimed in claim 1, characterized in that, for the production of pigmented powders, a titanium dioxide pigment is used which weakly nucleates the polyamide crystallization from ethanol ($\Delta T < 3$ °C, $\Delta T$ being characterized by the following equation

$$\Delta T = T_{max} - T_N$$

where

$T_{max}$ is the maximum temperature of the polyamide- and pigment-containing solution during the precipitation of the polyamide and

$T_N$ is the maximum temperature of the polyamidecontaining solution (without pigment) during the precipitation of the polyamide)).

3. The use of the coating powders as claimed in claims 1 and 2 for the production of coatings by the melt-coating process.

## Revendications

1. Procédé de préparation de poudres d'enduction d'une grosseur de grain pratiquement unitaire, à base de polyamides comportant au moins 10 atomes de carbone à liaison aliphatique par groupe carboxylamide ou de co-polyamide ou d'un mélange d'homopolyamides et copolyamides qui renferment au moins 70 % des motifs indiqués, selon le procédé de précipitation, caractérisé par le fait que la polyamide est dissoute dans de l'éthanol à des températures comprises dans un domaine de 127 à 135 °C, de manière que la fraction de polyamide dans la solution n'excède pas 25 % en poids ; que tout en éliminant l'éthanol par distillation, on refroidit la solution à une vitesse de 3 à 30 °C par heure ; que la température de la chemise du réacteur, jusqu'à la fin de la phase de précipitation, n'est pas inférieure à celle du contenu du réacteur et que la température se situe, pendant la précipitation, dans un domaine de 112 à 118 °C.

2. Procédé selon la revendication 1, caractérisé par le fait que pour préparer des poudres

7

pigmentées on utilise un pigment de dioxyde de titane qui nucléise faiblement la cristallisation de la polyamide dans l'éthanol ($\Delta t$ inférieur à 3 °C, $\Delta t$ étant caractérisé par la formule ci-après

$$\Delta t = T_{max} - T_N$$

et dans laquelle

$T_{max}$ est la température maximale, pendant la précipitation de la polyamide, de la solution renfermant la polyamide et le pigment.

$T_N$ est la température maximale, pendant la précipitation de la polyamide, de la solution renfermant la polyamide (sans pigment)).

3. L'utilisation, pour préparer des enductions selon le procédé de revêtement par fusion, des poudres d'enduction selon les revendications 1 et 2.